# EUROPÄISCHE PATENTANMELDUNG

(11) **EP 2 073 051 A2**
(43) Veröffentlichungstag der Anmeldung: **24.06.2009**
(21) Anmeldenummer: 08020687.3
(22) Anmeldetag: 28.11.2008
(51) Int. Cl.: G02B 27/09

(54) **Vorrichtung zur Formung von Laserstrahlung**

(30) Priorität: 19.12.2007 DE 102007061358
(71) Anmelder: LIMO Patentverwaltung GmbH & Co. KG, 36419 Gerstengrund (DE)
(72) Erfinder: Bartoschewski, Daniel, 45883 Gelsenkirchen (DE)
(74) Vertreter: Basfeld, Rainer

(57) **Zusammenfassung**

Vorrichtung zur Formung von Laserstrahlung, die in einer ersten, zu der Ausbreitungsrichtung (Z) der Laserstrahlung senkrechten Richtung (X) zueinander beabstandete Teilstrahlen (3) aufweist, insbesondere zur Formung von Laserstrahlung, die von einem Laserdiodenbarren (1) ausgeht, umfassend eine erste refraktive Grenzfläche (8), die zumindest eine Mehrzahl der Teilstrahlen (3) der zu formenden Laserstrahlung derart unterschiedlich ablenken kann, dass sie nach Hindurchtritt durch die erste Grenzfläche (8) zumindest teilweise konvergenter zueinander verlaufen, als vor dem Hindurchtritt durch die erste Grenzfläche (8), sowie weiterhin umfassend eine zweite refraktive Grenzfläche (9), durch die die durch die erste Grenzfläche (8) hindurch getretene Laserstrahlung hindurch treten kann, wobei die zweite Grenzfläche (9) zumindest einige der Teilstrahlen (9) derart ablenken kann, dass deren Konvergenz verringert wird.

## Beschreibung

Die vorliegende Erfindung betrifft eine Vorrichtung zur Formung von Laserstrahlung, die in einer ersten, zu der Ausbreitungsrichtung der Laserstrahlung senkrechten Richtung zueinander beabstandete Teilstrahlen aufweist, insbesondere zur Formung von Laserstrahlung, die von einem Laserdiodenbarren ausgeht.

Definitionen: In Ausbreitungsrichtung des zu beeinflussenden Lichts meint die mittlere Ausbreitungsrichtung des Lichts, insbesondere wenn dieses keine ebene Welle ist oder zumindest teilweise konvergent oder divergent ist. Mit Lichtstrahl, Teilstrahl oder Strahl ist, wenn nicht ausdrücklich anderes angegeben ist, kein idealisierter Strahl der geometrischen Optik gemeint, sondern ein realer Lichtstrahl, wie beispielsweise ein Laserstrahl mit einem Gauß-Profil, der keinen infinitesimal kleinen, sondern einen ausgedehnten Strahlquerschnitt aufweist.

Laserdiodenbarren weisen eine Mehrzahl von Emittern, beispielsweise 19 Emitter auf, die in der sogenannten Slow-Axis beabstandet zueinander angeordnet sind. Die Slow-Axis ist die eingangs genannte erste Richtung, in der sich die aktive Schicht der Halbleiterdiode erstreckt, wohingegen die Fast-Axis die dazu senkrechte Richtung ist. Beispielsweise weist ein jeder der Emitter eine Länge von etwa 150 µm in der Slow-Axis auf, wobei der Abstand zweier benachbarter Emitter zueinander in dieser Richtung etwa 400 µm beträgt. Das hat zur Folge, dass zwischen den von den einzelnen Emittern ausgehenden Teilstrahlen Dunkelbereiche vorhanden sind, die sich als nachteilig für die Brightness (spezifische Intensität) der Laserstrahlung erweisen.

Im Stand der Technik werden die von den einzelnen Emittern ausgehenden Teilstrahlen der Laserdiodenbarren durch Mikrooptiken in der Fast-Axis und zum Teil auch in der Slow-Axis kollimiert, ohne dass dabei die Periodizität der Strahlen der einzelnen Emitter manipuliert wird. Ein Beispiel dafür findet sich in der WO 2005/085934 A1. In diesem Stand der Technik werden danach je nach Anwendungszweck weitere strahlformende Optiken eingesetzt, um ein bestimmtes Strahlprofil zu erzielen. Dabei wird der Dunkelbereich zwischen den Emittern in Kauf genommen, was der erzielbaren Brightness eine Grenze setzt. Es entsteht somit infolge der Barrenstruktur eine konstruktiv gesetzte Grenze für die Brightness des gesamten Lasersystems, die von der physikalischen Grenze zählbar entfernt ist.

Ein weiteres Beispiel für eine strahlformende Optik findet sich in der DE 101 06 155 A1. Dort wird die von einem Laserdiodenbarren ausgehende Laserstrahlung in der Slow-Axis in zwei Teile aufgeteilt, wobei diese Teile anschließend in der Fast-Axis übereinander angeordnet werden. Dadurch wird der Querschnitt der Laserstrahlung von einer langgestreckt rechteckigen Form in eine weniger langgestreckt rechteckige Form überführt, die sich besser auf das Ende einer Lichtleitfaser fokussieren lässt.

Das der vorliegenden Erfindung zugrunde liegende Problem ist die Schaffung einer Vorrichtung der eingangs genannten Art, mit der die von einem Laserdiodenbarren ausgehende Laserstrahlung derart geformt werden kann, dass sie eine größere Brightness aufweist und/oder sich besser fokussieren lässt.

Dies wird erfindungsgemäß durch eine Vorrichtung mit den Merkmalen des Anspruchs 1 erreicht. Die Unteransprüche betreffen bevorzugte Ausführungsformen der vorliegenden Erfindung.

Gemäß Anspruch 1 ist vorgesehen, dass die Vorrichtung eine erste refraktive Grenzfläche umfasst, die zumindest eine Mehrzahl der Teilstrahlen der zu formenden Laserstrahlung derart unterschiedlich ablenken kann, dass sie nach Hindurchtritt durch die erste Grenzfläche zumindest teilweise konvergenter zueinander verlaufen, als vor dem Hindurchtritt durch die erste Grenzfläche, sowie dass die Vorrichtung weiterhin eine zweite refraktive Grenzfläche umfasst, durch die die durch die erste Grenzfläche hindurch getretene Laserstrahlung hindurch treten kann, wobei die zweite Grenzfläche zumindest einige der Teilstrahlen derart ablenken kann, dass deren Konvergenz verringert wird. Dabei kann durch Verringerung oder Eliminierung des Abstands zwischen den Teilsstrahlen in der ersten Richtung der Dunkelbereich zwischen den einzelnen Teilstrahlen verkleinert werden, so dass die erzielbare Brightness näher an die physikalische Grenze gebracht werden kann.

Es kann vorgesehen sein, dass die erste refraktive Grenzfläche zumindest eine Mehrzahl der Teilstrahlen der zu formenden Laserstrahlung derart unterschiedlich ablenken kann, dass sie nach dem Hindurchtritt durch die erste refraktive Grenzfläche auf einen Punkt ausgerichtet sind, der in Ausbreitungsrichtung der Laserstrahlung hinter der zweiten refraktiven Grenzfläche angeordnet ist.

Weiterhin kann vorgesehen sein, dass die Vorrichtung Kollimationsmittel umfasst, die die Laserstrahlung hinsichtlich der ersten Richtung und/oder hinsichtlich einer zweiten, zu der ersten Richtung und zu der Ausbreitungsrichtung der Laserstrahlung senkrechten Richtung zumindest teilweise kollimieren können, wobei insbesondere die Kollimationsmittel in Ausbreitungsrichtung der Laserstrahlung vor der ersten refraktiven Grenzfläche angeordnet sind.

Insbesondere kann dabei die zweite Grenzfläche zumindest einige der Teilstrahlen derart ablenken, dass die Konvergenz der Teilstrahlen derart verringert wird, dass sie mit Abweichungen von ± 10%, vorzugsweise ± 5 %, insbesondere von ± 1 % parallel zueinander verlaufen. Die einzelnen Teilstrahlen können somit nach dem Hindurchtritt durch die zweite refraktive Grenzfläche wieder parallel sein, wobei Periodizität und Dunkelbereich manipuliert sind. Dadurch wird eine höhere Brightness erzielt, als das mit den bisher erhältlichen Optiken möglich ist.

Es besteht die Möglichkeit, dass die erste und/oder die zweite der refraktiven Grenzflächen jeweils eine Mehrzahl von zueinander geneigten Flächen aufweisen, wobei insbesondere durch jede der Flächen mindestens einer der Teilstrahlen hindurchtreten kann. Dadurch werden einzelne der Teilstrahlen, insbesondere sämtliche Teilstrahlen unter voneinander verschiedenen Winkeln gebrochen. Beispielsweise können sich die Ablenkwinkel der durch die einzelnen Flächen der ersten refraktiven Grenzfläche hindurch getretenen Teilstrahlen derart unterscheiden, dass sämtliche Teilstrahlen nach dem Hindurchtritt durch die erste refraktive Grenzfläche auf einen Punkt ausgerichtet sind, der in Ausbreitungsrichtung der Laserstrahlung hinter der zweiten refraktiven Grenzfläche angeordnet ist. Insbesondere können sich die Ablenkwinkel der durch die einzelnen Flächen der zweiten refraktiven Grenzfläche hindurch getretenen Teilstrahlen derart unterscheiden, dass sämtliche Teilstrahlen nach dem Hindurchtritt durch die zweite refraktive Grenzfläche parallel zueinander verlaufen, wobei dabei insbesondere der Abstand zwischen den Teilsstrahlen in der ersten Richtung verkleinert wurde oder im wesentlichen nicht mehr vorhanden ist.

Die zueinander geneigten Flächen können zumindest teilweise plan sein und zumindest teilweise in der ersten Richtung aneinander anschließen.

Es kann vorgesehen sein, dass die zueinander geneigten Flächen einer jeden der beiden refraktiven Grenzflächen auf jeweils mindestens einer zylindrischen Kontur angeordnet sind.

Insbesondere kann vorgesehen sein, dass die mindestens eine zylindrische Kontur auf der ersten refraktiven Grenzfläche konvex geformt ist und/oder dass die mindestens eine zylindrische Kontur auf der zweiten refraktiven Grenzfläche konkav geformt ist. Dadurch ergibt sich eine Entsprechung der brechenden Winkel der planen Flächen auf der ersten und der zweiten refraktiven Grenzfläche. Insbesondere können die in der ersten Richtung aneinander anschließen Flächen der ersten refraktiven Grenzfläche zumindest teilweise einen Winkel zwischen 150° und 180°, insbesondere einen Winkel zwischen 165° und 180°, vorzugsweise einen Winkel zwischen 175° und 179° miteinander einschließen. Entsprechend können die in der ersten Richtung aneinander anschließenden Flächen der zweiten refraktiven Grenzfläche zumindest teilweise einen Winkel zwischen 180° und 210°, insbesondere einen Winkel zwischen 180° und 195°, vorzugsweise einen Winkel zwischen 181° und 185° miteinander einschließen. Die zweite refraktive Grenzfläche weist dabei insbesondere die gleiche Anzahl planer Flächen auf, die so ausgerichtet sind, dass sie die einzelnen Teilstrahlen verglichen mit der ersten refraktiven Grenzfläche unter dem jeweils negativen Winkel brechen, bevor sie den Punkt erreichen, auf den sie ausgerichtet sind.

Es kann vorgesehen sein, dass die Winkel zwischen den Flächen in der ersten Richtung von den äußeren Randbereichen der mindestens einen zylindrischen Kontur zu der Mitte der mindestens einen zylindrischen Kontur abnehmen.

Weiterhin kann vorgesehen sein, dass die Winkel zwischen den planen Flächen auf der ersten refraktiven Grenzfläche unterschiedlich zu den Winkeln zwischen den planen Flächen auf der zweiten refraktiven Grenzfläche sind. Damit trotzdem die Ablenkwinkel der Teilstrahlen bei der ersten und der zweiten Grenzfläche einander entsprechen, kann der Brechungsindex des Materials, in dem die erste Grenzfläche geformt ist, unterschiedlich zu dem Brechungsindex des Materials sein, in dem die zweite Grenzfläche geformt ist.

Weiterhin besteht die Möglichkeit, dass die erste und/oder die zweite der refraktiven Grenzflächen mindestens zwei Gruppen von zueinander geneigten Flächen aufweisen, wobei jede der Gruppen auf einer eigenen zylindrischen Kontur angeordnet ist.

Es kann weiterhin vorgesehen sein, dass die mindestens zwei zylindrischen Konturen auf der ersten refraktiven Grenzfläche in der ersten Richtung nebeneinander angeordnet sind und/oder dass die mindestens zwei zylindrischen Konturen auf der zweiten refraktiven Grenzfläche in der ersten Richtung voneinander beabstandet sind. Dadurch besteht die Möglichkeit, die Teilstrahlen in zwei separaten Gruppen zusammenzufassen, die dann beispielsweise durch eine geometrische Kopplung, eine Polarisationskopplung oder eine Wellenlängenkopplung kompakt überlagert werden können, um die Formung eines symmetrischen Strahlprofils als Ziel zu unterstützen. Ein solches Profil ist beispielsweise für die Einkoppelung der Laserstrahlung in Lichtleitfasern geeignet, die eine ebenfalls symmetrische Stirnfläche aufweisen.

Wie erwähnt verwenden bisherige Lösungen für die Aufteilung eine separate Optik. Durch die erfindungsgemäß Vorrichtung entfällt eine solche separate Optik, die nur die Aufgabe verfolgte, die Einzelstrahlen in zwei oder mehr Gruppen aufzuteilen. Vielmehr kann bei der erfindungsgemäßen Vorrichtung die Erhöhung der Brightness durch Eliminierung der Dunkelbereiche mit der Aufteilung der Teilstrahlen in Gruppen kombiniert werden. Die Ergebnisse dieser zweiten Funktion sind ein kürzerer Strahlengang und eine Verringerung der Komplexität. Möglich ist die Herstellung von fasergekoppelten Lasersystemen mit Fasern von 50 µm Kerndurchmesser und einer numerischen Apertur (NA) = 0,22 oder 100 µm Kerndurchmesser und einer NA = 0,12 bei der Verwendung von Laserdiodenbarren mit Breitstreifenemittern (BALB) als Lichtquelle. Die Erweiterung auf Mehrbarrensysteme ist ebenfalls möglich.

Es besteht die Möglichkeit, dass die Vorrichtung zwei Substrate umfasst, die in Ausbreitungsrichtung der Laserstrahlung hintereinander, insbesondere voneinander beabstandet, angeordnet sind.

Weiterhin kann vorgesehen sein, dass auf jedem der Substrate eine der refraktiven Grenzflächen angeordnet ist.

Dabei kann die erste refraktive Grenzfläche die Eintrittsfläche des ersten Substrates sein und/oder kann die zweite refraktive Grenzfläche die Austrittsfläche des zweiten Substrates sein.

Weiterhin können die Austrittsfläche des ersten Substrates plan und/oder dass die Eintrittsfläche des zweiten Substrates plan sein.

Weitere Merkmale und Vorteile der vorliegenden Erfindung werden deutlich anhand der nachfolgenden Beschreibung bevorzugter Ausführungsbeispiele unter Bezugnahme auf die beiliegenden Abbildungen. Darin zeigen
- Fig. 1: eine Draufsicht auf eine erfindungsgemäße Vorrichtung mit einem Laserdiodenbarren und beispielhaften Strahlengängen;
- Fig. 2a: eine Detailansicht gemäß dem Pfeil IIa in Fig. 1;
- Fig. 2b: eine Detailansicht gemäß dem Pfeil IIb in Fig. 1;

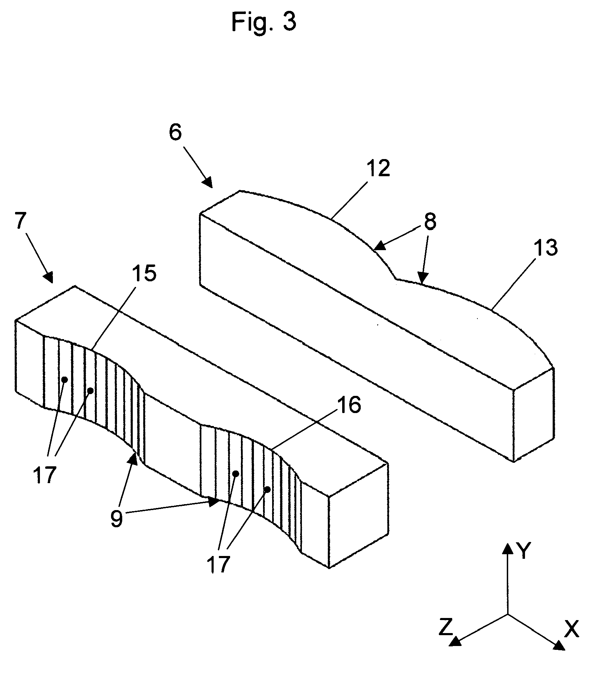

- Fig. 3: eine perspektivische Ansicht der beiden zur Formung beitragenden Substrate der Vorrichtung gemäß Fig. 1.

In den Figuren sind zur besseren Orientierung kartesische Koordinatensysteme eingezeichnet.

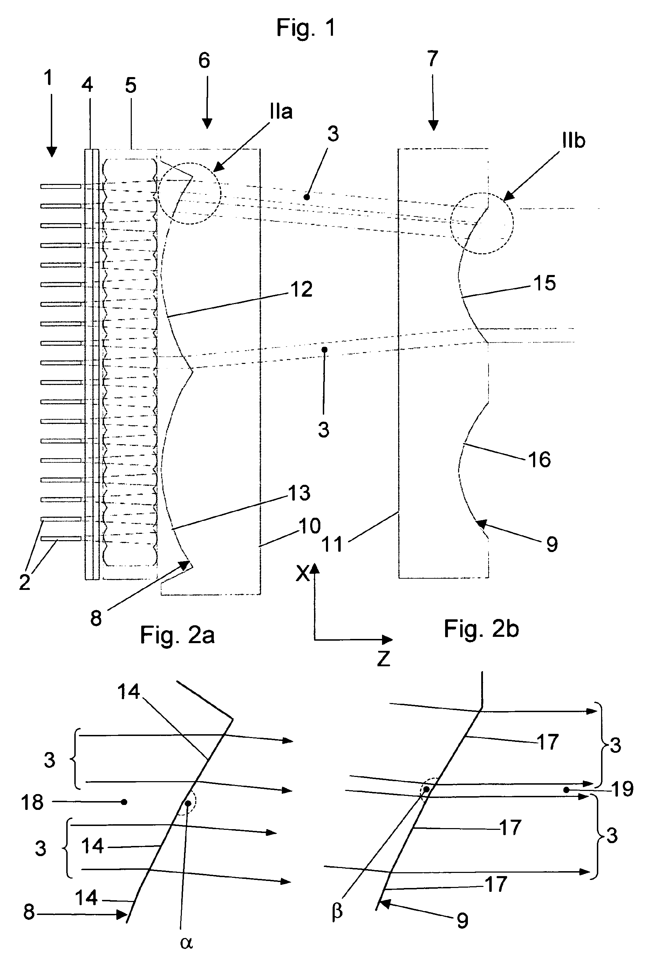

In Fig. 1 sind mit dem Bezugszeichen 1 ein Laserdiodenbarren und mit dem Bezugszeichen 2 die einzelnen Emitter des Laserdiodenbarrens 1 bezeichnet, die in der sogenannten Slow-Axis beziehungsweise in den Figuren in X-Richtung beabstandet zueinander nebeneinander angeordnet sind. Beispielsweise weist ein jeder der Emitter 2 eine Länge von etwa 150 µm in der Slow-Axis auf, wobei der Abstand zweier benachbarter Emitter 2 zueinander in dieser Richtung etwa 400 µm beträgt. Die einzelnen Emitter 2 senden Teilstrahlen 3 der Laserstrahlung des Laserdiodenbarrens 1 aus.

Die aus Fig. 1 ersichtliche Ausführungsform einer erfindungsgemäßen Vorrichtung umfasst in Ausbreitungsrichtung Z hinter den Emittern 2 eine Fast-Axis-Kollimationslinse 4, die die einzelnen Teilstrahlen 3 in der sogenannten Fast-Axis beziehungsweise in den Figuren in Y-Richtung kollimiert.

In Ausbreitungsrichtung Z hinter der Fast-Axis-Kollimationslinse 4 ist eine Strahltransformationsvorrichtung 5 vorgesehen, die einen jeden der einzelnen Teilstrahlen um 90° hinsichtlich der Ausbreitungsrichtung Z dreht. Dadurch wird die Divergenz der Teilstrahlen in der Fast-Axis mit der in der Slow-Axis getauscht, so dass die Teilstrahlen 3 nach Hindurchtritt durch die Strahltransformationsvorrichtung 5 in der Slow-Axis beziehungsweise in den Figuren in X-Richtung kollimiert sind. Derartige Strahltransformationsvorrichtungen 5 sind hinlänglich bekannt und weisen beispielsweise in X-Richtung nebeneinander angeordnete Zylinderlinsen auf, deren Zylinderachsen unter einem Winkel von 45° zur Y-Richtung in der X-Y-Ebene ausgerichtet sind.

In Ausbreitungsrichtung Z hinter der Strahltransformationsvorrichtung 5 umfasst die erfindungsgemäße Vorrichtung weiterhin zwei Substrate 6, 7, die in Ausbreitungsrichtung Z beabstandet zueinander hintereinander angeordnet sind. Das erste Substrat 6 weist auf seiner der Strahltransformationsvorrichtung 5 zugewandten Seite einer erste refraktive Grenzfläche 8 auf. Das zweite Substrat 6 weist auf seiner von dem ersten Substrat 6 abgewandten Seite eine zweite refraktive Grenzfläche 9 auf. Die einander zugewandten Seiten 10, 11 der Substrate 6, 7 sind jeweils plan ausgebildet.

Die als Eintrittsfläche des ersten Substrats 6 dienende erste refraktive Grenzfläche 8 weist zwei in X-Richtung aneinander angrenzende, konvexe, zylindrische Konturen 12, 13 auf, deren Zylinderachsen sich in Y-Richtung erstrecken. Auf jeder der konvexen Konturen 12, 13 sind in X-Richtung aneinander angrenzende, plane Flächen 14 vorgesehen, die jeweils einen Winkel α miteinander einschließen (siehe Fig. 2a). Die Winkel α zwischen den Flächen nehmen in X-Richtung von außen nach innen ab, wobei beispielsweise der Winkel α in den äußeren Randbereichen der konvexen zylindrischen Konturen 12, 13 etwa 175,5° und in der Mitte der konvexen zylindrischen Konturen 12, 13 etwa 179° beträgt. Dabei sind die planen Flächen 14 derart dimensioniert und angeordnet, dass jeweils immer einer der Teilstrahlen 3 auf eine der planen Flächen 14 trifft. Durch die planen Flächen 14 werden die Teilstrahlen 3 derart abgelenkt, dass sie konvergent zueinander verlaufen und sämtlich auf einen gedachten Punkt hinter dem zweiten Substrat 7 zulaufen.

Die als Austrittsfläche des zweiten Substrats 7 dienende zweite refraktive Grenzfläche 9 weist zwei in X-Richtung beabstandet zueinander angeordnete, konkave zylindrische Konturen 15, 16 auf, deren Zylinderachsen sich ebenfalls in Y-Richtung erstrecken. Auf jeder der konkaven Konturen 15, 16 sind in X-Richtung aneinander angrenzende, plane Flächen 17 vorgesehen, die jeweils einen Winkel β miteinander einschließen (siehe Fig. 2b). Die Winkel β zwischen den Flächen 17 nehmen in X-Richtung von außen nach innen ab, wobei beispielsweise der Winkel β in den äußeren Randbereichen der konkaven zylindrischen Konturen 12, 13 etwa 184,5° und in der Mitte der konkaven zylindrischen Konturen 12, 13 etwa 181° beträgt. Dabei sind die planen Flächen 17 derart dimensioniert und angeordnet, dass jeweils immer einer der von den planen Flächen 14 der ersten refraktiven Grenzfläche 8 abgelenkten Teilstrahlen 3 auf eine der planen Flächen 17 der zweiten refraktiven Grenzfläche 9 trifft. Durch die planen Flächen 17 werden die zueinander konvergenten Teilstrahlen 3 derart abgelenkt, dass sie nach dem Hindurchtritt durch die zweite refraktive Grenzfläche 9 wieder parallel zueinander verlaufen.

Dem Vergleich von Fig. 2a und Fig. 2b lässt sich entnehmen, dass die Dunkelbereiche 18 zwischen den Teilstrahlen 3 vor dem Hindurchtritt durch die beiden refraktiven Grenzflächen 8, 9 in X-Richtung deutlich ausgedehnter ist als die Dunkelbereiche 19 zwischen den Teilstrahlen 3 nach dem Hindurchtritt durch die beiden refraktiven Grenzflächen 8, 9. Im Idealfall sind die Dunkelbereiche 19 zwischen den Teilstrahlen 3 nach dem Hindurchtritt durch die beiden refraktiven Grenzflächen 8, 9 in X-Richtung annähernd null.

Hinter den beiden Substraten 6, 7 können nicht abgebildete Slow-Axis-Kollimationsmittel vorgesehen sein, die die verbleibende Divergenz der Teilstrahlen 3 in Y-Richtung verringern können.

## Patentansprüche

1. Vorrichtung zur Formung von Laserstrahlung, die in einer ersten, zu der Ausbreitungsrichtung (Z) der Laserstrahlung senkrechten Richtung (X) zueinander beabstandete Teilstrahlen (3) aufweist, insbesondere zur Formung von Laserstrahlung, die von einem Laserdiodenbarren (1) ausgeht, umfassend
- eine erste refraktive Grenzfläche (8), die zumindest eine Mehrzahl der Teilstrahlen (3) der zu formenden Laserstrahlung derart unterschiedlich ablenken kann, dass sie nach Hindurchtritt durch die erste Grenzfläche (8) zumindest teilweise konvergenter zueinander verlaufen, als vor dem Hindurchtritt durch die erste Grenzfläche (8), sowie
- eine zweite refraktive Grenzfläche (9), durch die die durch die erste Grenzfläche (8) hindurch getretene Laserstrahlung hindurch treten kann, wobei die zweite Grenzfläche (9) zumindest einige der Teilstrahlen (3) derart ablenken kann, dass deren Konvergenz verringert wird.

2. Vorrichtung nach Anspruch 1, **dadurch gekennzeichnet, dass** die erste refraktive Grenzfläche (8) zumindest eine Mehrzahl der Teilstrahlen (3) der zu formenden Laserstrahlung derart unterschiedlich ablenken kann, dass sie nach dem Hindurchtritt durch die erste refraktive Grenzfläche (8) auf einen Punkt ausgerichtet sind, der in Ausbreitungsrichtung (Z) der Laserstrahlung hinter der zweiten refraktiven Grenzfläche (9) angeordnet ist.

3. Vorrichtung nach einem der Ansprüche 1 oder 2, **dadurch gekennzeichnet, dass** die Vorrichtung Kollimationsmittel umfasst, die die Laserstrahlung hinsichtlich der ersten Richtung (X) und/oder hinsichtlich einer zweiten, zu der ersten Richtung (X) und zu der Ausbreitungsrichtung (Z) der Laserstrahlung senkrechten Richtung (Y) zumindest teilweise kollimieren können, wobei insbesondere die Kollimationsmittel zur Kollimation in der zweiten Richtung (Y) in Ausbreitungsrichtung (Z) der Laserstrahlung vor der ersten refraktiven Grenzfläche (8) angeordnet sind.

4. Vorrichtung nach einem der Ansprüche 1 bis 3, **dadurch gekennzeichnet, dass** die zweite Grenzfläche (9) zumindest einige der Teilstrahlen (3) derart ablenken kann, dass die Konvergenz der Teilstrahlen (3) derart verringert wird, dass sie mit Abweichungen von ± 10%, vorzugsweise ± 5 %, insbesondere von ± 1 % parallel zueinander verlaufen.

5. Vorrichtung nach einem der Ansprüche 1 bis 4, **dadurch gekennzeichnet, dass** die erste und/oder die zweite der refraktiven Grenzflächen (8, 9) jeweils eine Mehrzahl von zueinander geneigten Flächen (14, 17) aufweisen, wobei insbesondere durch jede der Flächen (14, 17) mindestens einer der Teilstrahlen (3) hindurchtreten kann.

6. Vorrichtung nach Anspruch 5, **dadurch gekennzeichnet, dass** die zueinander geneigten Flächen (14, 17) zumindest teilweise plan sind.

7. Vorrichtung nach einem der Ansprüche 5 oder 6, **dadurch gekennzeichnet, dass** die zueinander geneigten Flächen (14, 17) zumindest teilweise in der ersten Richtung (X) aneinander anschließen.

8. Vorrichtung nach einem der Ansprüche 5 bis 7, **dadurch gekennzeichnet, dass** die zueinander geneigten Flächen (14, 17) einer jeden der beiden refraktiven Grenzflächen (8, 9) auf jeweils mindestens einer zylindrischen Kontur (12, 13, 15, 16) angeordnet sind.

9. Vorrichtung nach Anspruch 8, **dadurch gekennzeichnet, dass** die Zylinderachse der mindestens einen zylindrischen Kontur (12, 13, 15, 16) sich in der zweiten Richtung (Y) erstreckt.

10. Vorrichtung nach einem der Ansprüche 8 oder 9, **dadurch gekennzeichnet, dass** die mindestens eine zylindrische Kontur (12, 13) auf der ersten refraktiven Grenzfläche (8) konvex geformt ist und/oder dass die mindestens eine zylindrische Kontur (15, 16) auf der zweiten refraktiven Grenzfläche (9) konkav geformt ist.

11. Vorrichtung nach einem der Ansprüche 5 bis 10, **dadurch gekennzeichnet, dass** die in der ersten Richtung (X) aneinander anschließenden Flächen (14) der ersten refraktiven Grenzfläche (8) zumindest teilweise einen Winkel zwischen 150° und 180°, insbesondere einen Winkel zwischen 165° und 180°, vorzugsweise einen Winkel zwischen 175° und 179° miteinander einschließen.

12. Vorrichtung nach einem der Ansprüche 5 bis 11, **dadurch gekennzeichnet, dass** die in der ersten Richtung (X) aneinander anschließenden Flächen (17) der zweiten refraktiven Grenzfläche (9) zumindest teilweise einen Winkel zwischen 180° und 210°, insbesondere einen Winkel zwischen 180° und 195°, vorzugsweise einen Winkel zwischen 181° und 185° miteinander einschließen.

13. Vorrichtung nach einem der Ansprüche 8 bis 12, **dadurch gekennzeichnet, dass** die Winkel (α, β) zwischen den Flächen (14, 17) in der ersten Richtung (X) von den äußeren Randbereichen der mindestens einen zylindrischen Kontur (12, 13, 15, 16) zu der Mitte der mindestens einen zylindrischen Kontur (12, 13, 15, 16) abnehmen.

14. Vorrichtung nach einem der Ansprüche 8 bis 13, **dadurch gekennzeichnet, dass** die erste und/oder die zweite der refraktiven Grenzflächen (8, 9) mindestens zwei Gruppen von zueinander geneigten Flächen (14, 17) aufweisen, wobei jede der Gruppen auf einer eigenen zylindrischen Kontur (12, 13, 15, 16) angeordnet ist.

15. Vorrichtung nach Anspruch 14, **dadurch gekennzeichnet, dass** die mindestens zwei zylindrischen Konturen (12, 13) auf der ersten refraktiven Grenzfläche (8) in der ersten Richtung (X) nebeneinander angeordnet sind und/oder dass die mindestens zwei zylindrischen Konturen (15, 16) auf der zweiten refraktiven Grenzfläche (9) in der ersten Richtung (X) voneinander beabstandet sind.
